# EUROPÄISCHE PATENTSCHRIFT

(11) **EP 2 543 914 B1**
(45) Veröffentlichungstag und Bekanntmachung des Hinweises auf die Patenterteilung: **22.04.2015**
(21) Anmeldenummer: 11005463.2
(22) Anmeldetag: 05.07.2011
(51) Int. Cl.: F16K 7/04, F16K 31/04

(54) **Vorrichtung zum radialen Zusammendrücken einer elastischen Leitung für eine strömendes Medium**
Device for radial compression of an elastic conduit for a flowing medium
Dispositif de pression radiale d'une conduite élastique pour fluide

(43) Veröffentlichungstag der Anmeldung: 09.01.2013
(73) Patentinhaber: Asco Numatics GmbH, 75248 Ölbronn-Dürrn (DE)
(72) Erfinder: Ams, Felix, 75236 Kämpfelbach (DE); Schuler, Manuel, 75305 Neuenbürg (DE); Boden, Manuel, 75443 Ötisheim (DE)
(74) Vertreter: Witte, Weller & Partner Patentanwälte mbB

(56) Entgegenhaltungen:
- EP-A2- 0 623 673
- EP-A2- 1 308 657
- EP-B1- 1 664 600
- CH-A2- 701 531
- GB-A- 2 274 326
- JP-A- 4 136 573
- US-A- 5 296 145
- US-A- 5 521 473
- "5-A H-Bridge for DC-Motor Applications", , 31. Juli 2007 (2007-07-31), XP55024243, Gefunden im Internet: URL:http://www.infineon.com/dgdl/TLE5205-2 _DS_11[1].pdf?folderId=db3a30431b3e89eb011 bb632994f065b&fileId=db3a30431f848401011fc 747c7a0797f [gefunden am 2012-04-11]
- "L298 - DUAL FULL-BRIDGE DRIVER", , 31. Januar 2000 (2000-01-31), XP55024244, Gefunden im Internet: URL:http://www.st.com/internet/com/TECHNIC AL_RESOURCES/TECHNICAL_LITERATURE/DATASHEE T/CD00000240.pdf [gefunden am 2012-04-11]
- "Controlling DC Brush Motors with H-bridge Driver ICs", , 27. Januar 2009 (2009-01-27), XP55024245, Gefunden im Internet: URL:http://www.rohm.com/us/downloads/Ads/H -Bridge-908/100260.H-BRDG_WP_Jan09.pdf [gefunden am 2012-04-11]

## Beschreibung

Die Erfindung bezieht sich auf eine Vorrichtung zum radialen Zusammendrücken einer elastischen Leitung für ein strömendes Medium an einer Leitungsstelle, mit einem Einlegekanal zum Einlegen eines Leistungsabschnitts der Leitung, mit einem quer zum Einlegekanal verschieblichen Druckstück und einem am Einlegekanal dem Druckstück gegenüberliegenden Gegenstück, die beide in den Einlagekanal hineinragen, und mit einem auf das Druckstück zu dessen Verschiebung wirkenden Aktor.

Mit einer solchen Vorrichtung wird durch Zusammendrücken oder Quetschen einer Leitungsstelle einer elastischen Leitung, z.B. eines Schlauchs, der durch die Leitung fließende Volumenstrom eines flüssigen oder gasförmigen Mediums, mitunter auch Fluid genannt, bis zur vollständigen Unterbrechung gedrosselt. Verwendete Fluide sind z. B. Wasser, wässrige Lösungen im Medizin- und Nahrungsmittelbereich, Öle, Luft, neutrale Gase.

Die GB 2 274 326 A beschreibt eine entsprechende Vorrichtung, bei der die elastische Leitung offen in einem Basisteil liegt, an dem eine elektromotorische Antriebseinheit angeordnet ist, die über ein Translationsmodul in Form eines exzentrisch gelagerten Nockens das Druckstück auf das Gegenstück zu drückt.

Die EP 1 664 600 B1 beschreibt eine vergleichbare Vorrichtung mit einem elektrischen Aktor, der ein verschiebliches Druckstück durch eine Seitenwand eines Einlegekanals drückt, um die dort befindliche elastische Leitung mittels des Druckstückes sowie eines Gegenstückes abzudrücken.

Die EP 1 308 657 A2 sowie die JP 04 136 573 A beschreiben eine vergleichbare Vorrichtung, bei der eine elastische Leitung über ein Druckstück abgequetscht wird, das von einem Elektromotor über ein zwischengeschaltetes Translationsmodul in Form eines Schraubengetriebes bewegt wird.

Eine ansonsten bekannte Vorrichtung dieser Art zur Unterbrechung des Durchflusses eines Volumenstroms des strömenden Mediums, auch Schlauchquetschventil genannt, unterbricht den Durchfluss des strömenden Mediums durch Abklemmen eines elastischen Schlauchs. Hierzu weist der Aktor einen Elektromagneten, dessen Magnetanker fest mit dem radial auf dem Schlauch drückenden Druckstück verbunden ist, und eine das Druckstück belastende Druckfeder auf. In einer Ausführung des Schlauchquetschventils als stromlos geschlossen presst die Druckfeder das Druckstück auf die Schlauchstelle, so dass der Schlauch vollständig zusammengedrückt ist. Mit Bestromung des Elektromagneten wird die Federkraft der Druckfeder kompensiert, das Druckstück gibt den Schlauch frei und der elastische Schlauch stellt seinen ursprünglichen lichten Querschnitt her.

Der Erfindung liegt die Aufgabe zugrunde, bei einer Vorrichtung der eingangs genannten Art bei kompakter Ausführung am Druckstück höhere Druckkräfte zu erzielen.

Die Aufgabe ist erfindungsgemäß durch die Merkmale im Anspruch 1 gelöst.

Gemäß der Erfindung ist der Einlegekanal in einem die Antriebseinheit tragenden Basisteil, dieses quer durchlaufend, enthalten und das Translationsmodul ist im Basisteil aufgenommen, wobei das mit dem Ausgangsglied des Translationsmoduls verbundene Druckstück durch eine den Einlegekanal querende Ausnehmung in der Kanalwand des Einlegekanals hindurchtaucht. Durch diese Maßnahmen wird eine bauraumsparende, kompakte Ausführung der Vorrichtung erzielt.

Gemäß der Erfindung ist das Gegenstück in einen im Basisteil ausgebildeten Schacht herausnehmbar eingesetzt. Der Schacht ist gegenüber der Ausnehmung zum Durchtauchen des Druckstücks angeordnet und quert den Einlegekanal. Das Gegenstück ist manuell bedienbar und kann zum Einlegen und Entnehmen des Leitungsabschnitts in den Einlegekanal entfernt werden.

Die erfindungsgemäße Vorrichtung hat den Vorteil, dass durch die Ausbildung des Aktors als eine mit einem Translationsmodul gekoppelte elektromotorische Antriebseinheit gegenüber einem Elektromagneten deutlich höhere Druckkräfte zum Zusammenpressen der elastischen Leitung erzielt werden. Mit den höheren Druckkräften können dickwandigere Leitungen oder Leitungen mit größeren Strömungsdrücken zuverlässig abgesperrt werden. Dabei ist die Stromaufnahme der elektromotorischen Antriebseinheit deutlich geringer als bei einem Elektromagneten, insbesondere dann, wenn die Antriebseinheit vorteilhaft ein Untersetzungsgetriebe aufweist. Anders als bei einem Elektromagneten kann die Stromaufnahme in den Endlagen des Druckstücks reduziert werden, ohne dass der vom Druckstück an der Leitungsstelle eingestellte lichte Leitungsquerschnitt verändert wird. Mit der erfindungsgemäßen Ausbildung des Aktors können ohne zusätzlichen Energiebedarf größere Hübe des Druckstücks realisiert werden, so dass auch Leitungen mit großem Druckmesser verwendet werden können.

Die grundsätzlichen Vorteile der Vorrichtung bleiben dabei vollständig erhalten, nämlich das Vermeiden von Turbulenzen oder Totvolumen bei der Unterbrechung des Volumenstroms, die Möglichkeit des Durchflusses des Mediums in beide Richtungen, eine lange Lebensdauer der Leitung durch sanften und konstanten Druck beim Klemmen, die Auswechselbarkeit der Leitung als einziger medienberührter Teil und somit Vermeidung von Kontaminierung bei Einsatz von unterschiedlichen Flüssigkeiten oder Gasen.

Gemäß der Erfindung ist das Translationsmodul selbsthemmend und weist ein mit der Abtriebswelle fest verbundenes Eingangsglied und ein mit dem Druckstück fest verbundenes Ausgangsglied auf, das vorzugsweise einstückig mit dem Druckstück ausgeführt ist. Ein- und Ausgangsglied sind koaxial angeordnet und weisen jeweils eine von zwei aufeinander gleitenden, in Achsrichtung ansteigenden Steuerkonturen auf. Vorteilhaft ist dabei der Anstieg der Steuerkonturen so gewählt, dass das Translationsmodul selbsthemmend ist. Dies hat den Vorteil, dass bei Erreichen eines gewünschten Verschiebewegs des Druckstücks, und damit eines eingestellten Durchflussquerschnitts in der Leitung, die elektromotorische Antriebseinheit stromlos geschaltet werden kann, ohne dass das Druckstück seine eingenommene Position verändert. Dies trägt erheblich zur Energieeinsparung bei.

Weitere besondere Erfindungsmerkmale sowie Ausgestaltungen des Erfindungsgegenstands ergeben sich aus den weiteren Ansprüchen und der nachfolgenden Beschreibung.

Gemäß einer vorteilhaften Ausführungsform der Erfindung sind Ein- und Ausgangsglied hohlzylindrisch ausgebildet und die Steuerkonturen als an den Hohlzylindern umlaufende Ringflächen ausgebildet. Das hohlzylindrische Eingangsglied ist in dem hohlzylindrischen Ausgangsglied drehbeweglich und axial verschieblich geführt. Diese konstruktive Ausbildung ermöglicht eine besonders einfache und kostengünstige Ausführung des Translationsmoduls.

Gemäß einer vorteilhaften Ausführungsform der Erfindung ist an beiden Enden des Einlegekanals jeweils ein den Leitungsabschnitt teilweise umgreifender Halter zum unverschieblichen Festlegen des Leitungsabschnitts im Basisteil ausgebildet. Vorteilhaft ist dabei der lichte Durchmesser der Halter kleiner als der Durchmesser des Einlegekanals, so dass der elastische Leitungsabschnitt in einfacher Weise in den Haltern geklemmt werden kann.

Gemäß einer vorteilhaften Ausführungsform der Erfindung weisen der Einlegekanal und die beiden endseitigen Halter einen etwa C-förmigen Querschnitt auf und bilden eine seitlich offene Einlegeöffnung für den Leitungsabschnitt.

Gemäß einer vorteilhaften Ausführungsform der Erfindung ist das Basisteil in einen den Einlegekanal enthaltenden Kanalkörper und einen die Antriebseinheit tragenden, mit einem radial abstehenden Befestigungsflansch versehenen Flanschkörper unterteilt, die fest miteinander verbunden sind. Das Translationsmodul ist in einem Hohlraum im Basisteil aufgenommen, der sich aus einem im Flanschkörper und einem im Basisteil ausgebildeten Hohlraumabschnitt zusammensetzt. Durch diese Trennung des Basisteils wird die Montage der Vorrichtung deutlich erleichtert.

Gemäß einer vorteilhaften Ausführungsform der Erfindung weist das Ausgangsglied des Translationsmoduls einen ersten und einen zweiten Axialanschlag auf, die zusammen mit einem am Basisteil ausgebildeten ersten Gegenanschlag und einem am Eingangsglied des Translationsmoduls ausgebildeten zweiten Gegenanschlag den Verschiebeweg des Druckstücks begrenzen. Vorteilhaft ist dabei der erste Axialanschlag von einen am Ausgangsglied radial abstehenden Flansch und der erste Gegenanschlag von einer im Basisteil, vorzugsweise am Kanalkörper des Basisteils, ausgebildeten Ringschulter gebildet, wobei bevorzugt die Ringschulter dadurch realisiert wird, dass die beiden Hohlraumabschnitte des das Translationsmodul aufnehmenden Hohlraums mit unterschiedlichen Querschnitten ausgeführt sind, so dass am Übergang vom querschnittsgrößeren Hohlraumabschnitt im Flanschkörper zum querschnittskleineren Hohlraumabschnitt im Kanalkörper eine die Ringschulter bildende Hohlraumstufe entsteht. Der zweite Axialanschlag und der zweite Gegenanschlag sind jeweils von einem die Steuerkonturen an Aus- und Eingangsglied begrenzenden Axialsteg gebildet. Auf diese Weise lassen sich Anschläge und Gegenanschläge bei Erzielung einer einfachen Montage fertigungstechnisch günstig herstellen.

Gemäß einer vorteilhaften Ausführungsform der Erfindung ist das Druckstück schwertartig mit gerundeter Schwertschneide ausgebildet, und das Gegenstück weist einen der Schwertschneide zugekehrten, sich in Richtung der Schwertscheide erstreckenden, fingerartigen, konvexen Höcker auf. Der Höcker ist auf einem etwa quaderförmigen Tragkörper, vorzugsweise einstückig mit diesem, angeordnet und der Tragkörper ist in dem Schacht geführt. Durch die Rundungen von Schwertschneide und Höcker wird ein sanftes Pressen der elastischen Leitung erzielt. Beschädigungen an der Quetschstelle der Leitung werden vermieden, was zu einer langen Lebensdauer der Leitung beträgt. Durch Vorsehen von Rastmulden an einander abgekehrten Seitenflächen des Trägerkörpers lässt sich eine vorteilhafte, leicht lösbare Verrastung des Gegenstücks im Schacht erzielen.

Gemäß einer vorteilhaften Ausführungsform der Erfindung umfasst die elektromotorische Antriebseinheit einen in einem an eine Versorgungsspannung anschließbaren Stromkreis angeordneten Elektromotor, z. B. in Form eines Gleichstrommotors, und ein z. B. als Untersetzungsgetriebe ausgebildetes Getriebe mit einer Abtriebswelle. Durch eine entsprechende Auslegung des Drehzahlverhältnisses des Getriebes kann das zur Betätigung des Druckstücks erforderliche Drehmoment des Elektromotors so gewählt werden, z. B. größer oder kleiner, dass eine möglichst große Energieeinsparung erfolgt.

Gemäß einer vorteilhaften Ausführungsform der Erfindung ist im Stromkreis des Elektromotors ein Messwiderstand zur Strommessung angeordnet. Die am Messwiderstand abgegriffene Messgröße wird einer den Elektromotor steuernden z. B. elektrischen Steuereinheit, z. B. Steuerelektronik, zugeführt. Nach Maßgabe von an die Steuereinheit angelegten Steuersignalen wird der Volumenstrom des Mediums durch die Leitungsstelle vollständig abgeklemmt oder mehr oder weniger freigegeben. Durch die dabei erfolgende Strommessung können mit entsprechender Steuerung diverse Funktionen zur Energieeinsparung herbeigeführt werden.

Gemäß einer vorteilhaften Ausführungsform der Erfindung weist die Steuereinheit ein erstes Steuermodul auf, das die am Druckstück erforderliche Druckkraft abhängig von der Messgröße am Messwiderstand einstellt. Ein zweites Steuermodul der Steuereinheit erkennt abhängig von der Messgröße das Ende des Verstellwegs des Druckstücks und löst eine Abschaltung des Elektromotors oder eine Reduzierung dessen Stromaufnahme aus. Ein drittes Steuermodul der Steuereinheit überwacht die Versorgungsspannung und löst bei Spannungsabfall die Überführung des Druckstücks in eine Verschiebeendlage aus. Hierzu sind am Stromkreis des Elektromotors ein Spannungsteiler zum Abtasten der Versorgungsspannung und ein Energiespeicher, angeschlossen, der bei Spannungsausfall kurzzeitig die Stromversorgung des Elektromotors übernimmt.

Gemäß einer vorteilhaften Ausführungsform der Erfindung ist im Stromkreis des Elektromotors eine Brückenendstufe angeordnet. Die Steuereinheit weist ein die Brückenendstufe ansteuerndes viertes Steuermodul zum Umkehr der Drehrichtung des Elektromotors auf. Durch die Umkehrung der Drehrichtung der elektrischen Antriebseinheit wird das Eingangsglied des Translationsmoduls hochgedreht, so dass die Elastizität der elastischen Leitung ausreicht, das Druckstück und das Ausgangsglied des Translationsmoduls hoch zu drücken und damit den lichten Querschnitt der Leitung für den vollen Volumenstrom wieder herzustellen. Damit entfallen zusätzliche Rückstellmittel für das Druckstück, zu deren Überwindung bei der Zustellung der Leitung höhere Verstellkräfte von der elektromotorischen Antriebseinheit aufgebracht werden müssten.

Gemäß einer vorteilhaften Ausführungsform der Erfindung ist die Steuereinheit ein Mikroprozessor, in dem die genannten Steuermodule integriert sind.

Die Erfindung ist nachfolgend anhand eines in den Zeichnungen dargestellten Ausführungsbeispiels näher erläutert. Es zeigen:
- Fig. 1: eine perspektivische Ansicht einer Vorrichtung zum radialen Zusammenpressen einer elastischen Leitung,
- Fig. 2: einen Längsschnitt der Vorrichtung in Fig. 1, und zwar längs der Linie A-A in Fig. 3,
- Fig. 3: einen Schnitt längs der Linie B - B in Fig. 2,
- Fig. 4: eine vergrößerte perspektivische Darstellung eines mit einem Druckstück verbundenen Translationsmoduls in der Vorrichtung gemäß Fig. 1 bis 3,
- Fig. 5: eine perspektivische Darstellung eines Gegenstücks in der Vorrichtung gemäß Fig. 1 bis 3,
- Fig. 6: einen Schaltplan eines Steuergeräts der Vorrichtung in Fig. 1 bis 3.

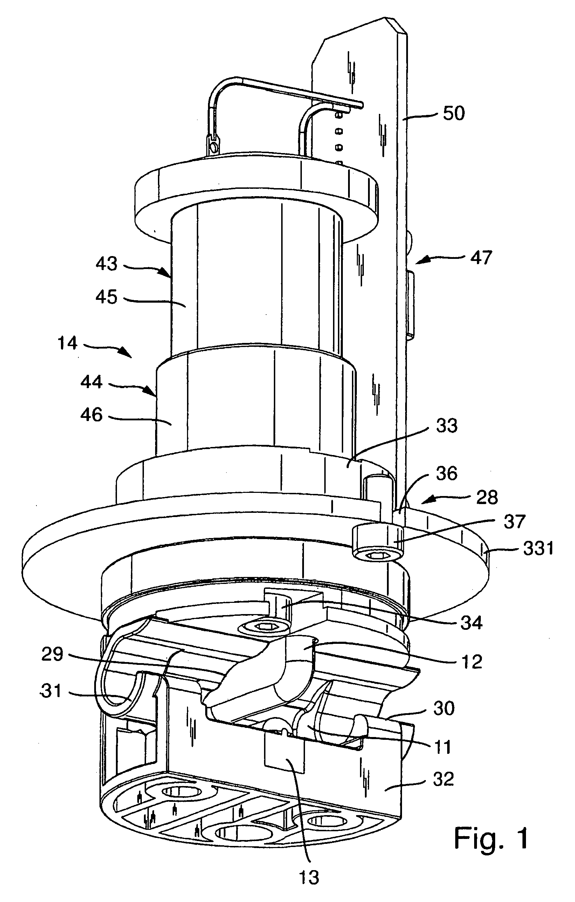

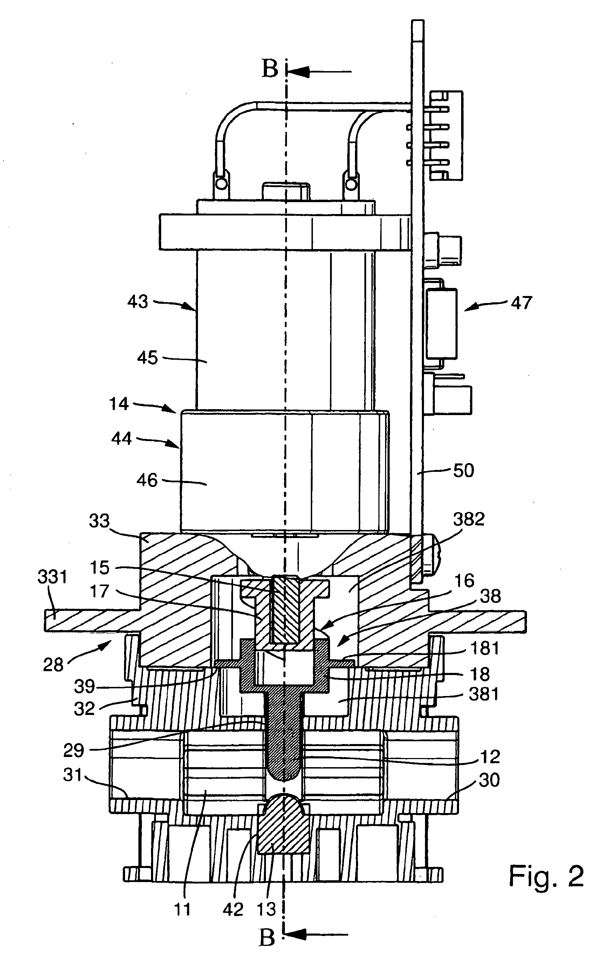

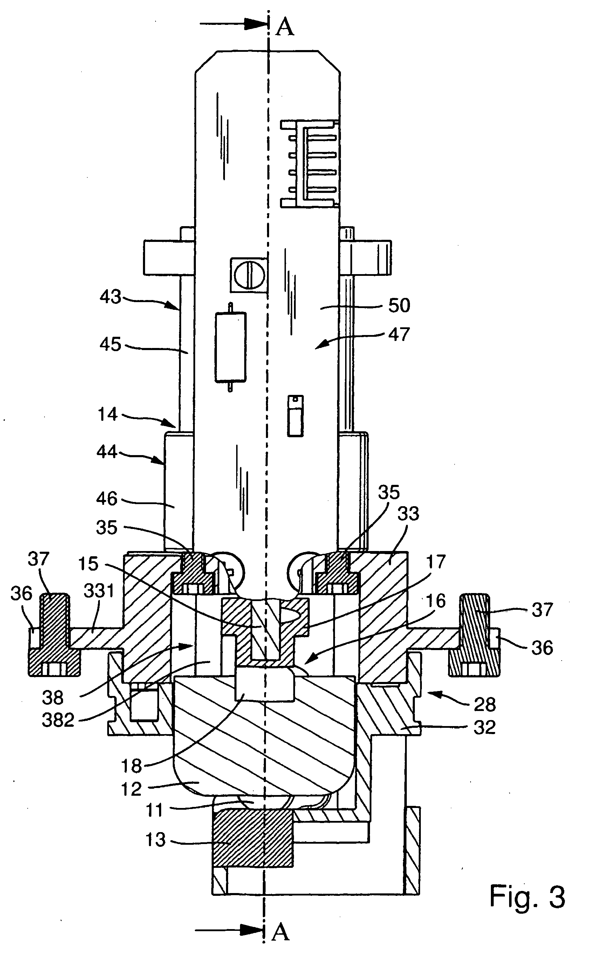

Die in Fig. 1 perspektivisch und in Fig. 2 und 3 in zwei verschiedenen Schnitten dargestellte Vorrichtung zum radialen Zusammendrücken einer von einem flüssigen oder gasförmigen Medium durchströmbaren elastischen Leitung, z.B. eines Schlauchs, an einer definierten Leitungs- bzw. Schlauchstelle, kurz Schlauchquetschventil genannt, weist einen Einlegekanal 11 zum Einlegen eines Leitungsabschnitts der Leitung, ein quer zum Einlegekanal 11 verschiebliches Druckstück 12, ein am Einlegekanal 11 dem Druckstück 12 gegenüberliegendes Gegenstück 13 und einen auf das Druckstück 12 zu dessen Verschiebung wirkenden Aktor auf. Der Aktor umfasst eine elektromotorische Antriebseinheit 14 mit einer Abtriebswelle 15 und ein Translationsmodul 16, das eine Drehbewegung der Abtriebswelle 15 in eine Linearbewegung des Druckstücks 12 umsetzt. Das Translationsmodul 16 weist ein mit der Abtriebswelle 15 fest verbundenes Eingangsglied 17 und ein mit dem Druckstück fest verbundenes Ausgangsglied 18 auf. Im dargestellten Ausführungsbeispiel sind Ausgangsglied 18 und Druckstück 12 einstückig ausgeführt. Eingangsglied 17 und Ausgangsglied 18 sind koaxial angeordnet und weisen jeweils eine von zwei aufeinander gleitenden, in Achsrichtung ansteigenden Steuerkonturen 19 bzw. 20 auf, wobei der Anstieg der Steuerkonturen 19, 20 so gewählt ist, dass sich für das Translationsmodul 16 Selbsthemmung ergibt.

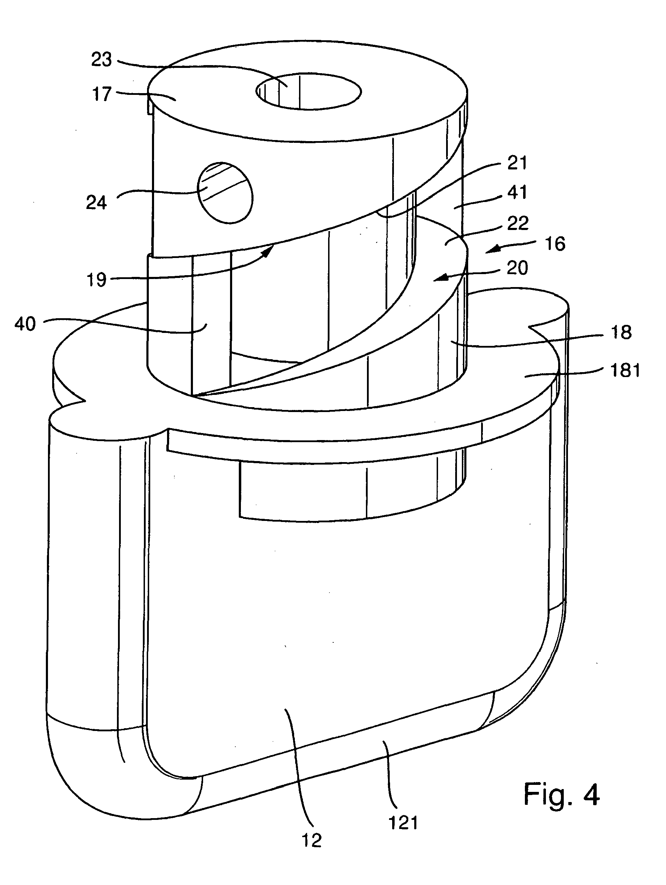

In Fig. 4 ist das Translationsmodul 16 mit Druckstück 12 perspektivisch in Vergrößerung dargestellt. Wie dort zu sehen ist, sind Ein- und Ausgangsglied 17, 18 hohlzylindrisch ausgebildet. Das hohlzylindrische Eingangsglied 17 ist in dem hohlzylindrischen Ausgangsglied 18 drehbeweglich und axial verschieblich geführt. Die Steuerkonturen 19, 20 sind als umlaufende Ringflächen, Ringflächen 21 am Eingangsglied 17 und Ringfläche 22 am Ausgangsglied 18, ausgebildet. Das Eingangsglied 17 weist eine zentrale Axialbohrung 23 zum Aufschieben des Eingangsglieds 17 auf die Abtriebswelle 15 und eine Radialbohrung 24 mit Innengewinde zum Einschrauben einer nicht gezeigten Schraube auf, durch die das Eingangsglied 17 an der Abtriebswelle 15 festgeklemmt wird. Das einstückig an das Ausgangsglied 18 angeformte Druckstück 12 ist schwertartig mit gerundeter Schwertschneide 121 ausgebildet. Außerdem ist an dem Ausgangsglied 18 ein radial abstehender Flansch 181 angeformt, der einen ersten Axialanschlag zur Begrenzung des Verschiebewegs des Druckstücks 12 bildet.

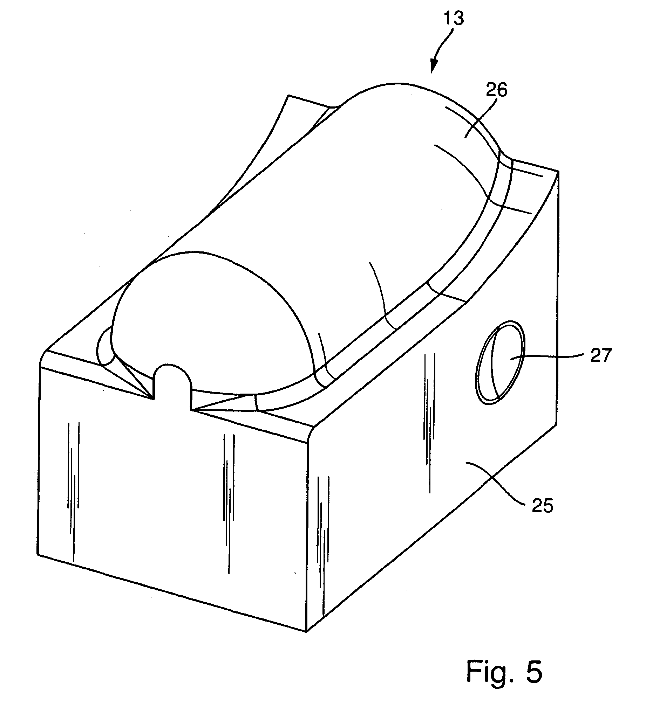

Das in Fig. 5 in vergrößerter Darstellung perspektivisch dargestellte Gegenstück 13 weist einen etwa quaderförmigen Tragkörper 25 mit einem fingerartigen, konvexen Höcker 26 auf, der einstückig auf der Oberseite des Tragkörpers 25 ausgeformt ist. Der Trägkörper 25 ist auf voneinander abgekehrten Längsseiten mit je einer Rastmulde 27 zum Verrasten versehen. Außerdem kann an den Tragkörper 25 noch ein Griffteil zur manuellen Handhabung des Gegenstücks 13 angeformt sein.

Der Einlegekanal 11 ist im Basisteil 28 geformt. Das Basisteil 28 trägt die elektromotorische Antriebseinheit 14 und nimmt das Translationsmodul 16 auf, wobei das einstückig mit dem Ausgangsglied 18 des Translationsmoduls 16 verbundene Druckstück 12 durch eine den Einlegekanal 11 querende Ausnehmung 29 in der Kanalwand des Einlegekanals 11 hindurchtaucht und in dieser verschieblich geführt ist. An den beiden Enden des Einlegekanals 11 ist jeweils ein den eingelegten Leitungsabschnitt teilweise umgreifender Halter 30 bzw. 31 zum Festlegen des Leitungsabschnitts ausgebildet, wobei der lichte Durchmesser der Halter 30, 31 kleiner ist als der lichte Durchmesser des Einlegekanals 11, um so eine Klemmung des Leitungsabschnitts im Basisteil 28 zu bewirken. Zur Bildung einer quer zum Einlegekanal 11 verlaufenden Einlegeöffnung für den Leitungsabschnitt weisen Einlegekanal 11 und Halter 30, 31 einen etwa C-förmigen Querschnitt auf.

Das Basisteil 28 ist im Ausführungsbeispiel in einen den Einlegekanal 11 mit Halter 30, 31 enthaltenden Kanalkörper 32 und einen die elektromotorische Antriebseinheit 14 tragenden Flanschkörper 33, der mit einen radial abstehenden Befestigungsflansch 331 versehen ist, unterteilt. Kanalkörper 32 und Flanschkörper 33 sind mittels Schrauben 34 (Fig. 1) fest miteinander verbunden. Der Flanschkörper 33 ist mittels Schrauben 35 (Fig. 3) an der elektromotorischen Antriebseinheit 14 befestigt. Der Befestigungsflansch 331 trägt randseitig zwei Aussparungen 36 zum Durchstecken von Befestigungsschrauben 37 (Fig. 3).

Das Translationsmodul 16 ist in einem im Innern des Basisteils 28 ausgebildeten Hohlraum 38 angeordnet, der sich aus zwei Hohlraumabschnitten 381 und 382 zusammensetzt, von denen der Hohlraumabschnitt 381 im Kanalkörper 32 und der Hohlraumabschnitt 382 im Flanschkörper 33 ausgebildet ist. Der Hohlraumabschnitt 381 ist mit einem gegenüber dem Querschnitt des Hohlraumabschnitts 382 kleinerem Querschnitt ausgebildet, so dass sich am Übergang der beiden Hohlraumabschnitte 381, 382 eine Hohlraumstufe mit einer Ringschulter 39 ergibt, die einen ersten Gegenanschlag zu dem von dem Flansch 181 am Ausgangsglied 18 des Translationsmoduls 16 gebildeten ersten Axialanschlag bildet. Erster Axialanschlag und erster Gegenanschlag begrenzen den Verschiebeweg des Druckstücks 12 hin zum Gegenstück 13. Ein zweiter Axialanschlag am Ausgangsglied 18 des Translationsmoduls 16 begrenzt mit einem zweiten Gegenanschlag am Eingangsglied 17 des Translationsmoduls 16 den Verschiebeweg des Druckstücks 12 nach oben, also weg vom Gegenstück 13. Der zweite Axialanschlag wird von einem am Ausgangsglied 18 die Steuerkontur 20, also die Ringfläche 22, begrenzenden Axialsteg 40 und der zweite Gegenanschlag von einem die Steuerkontur 19, also die Ringfläche 21, am Eingangsglied 17 begrenzenden Axialsteg 41 gebildet (Fig. 4).

Zur Aufnahme des Gegenstücks 13 ist in das Basisteil 28, genauer gesagt in den Kanalkörper 32, der Ausnehmung 29 für das Druckstück 12 am Einlegekanal 11 gegenüberliegend, ein den Einlegekanal 11 querender Schacht 42 (Fig. 3) ausgebildet. Die Abmessungen von Schacht 42 und Tragkörper 25 des Gegenstücks 13 sind so aufeinander abgestimmt, dass das Gegenstück 13 formschlüssig in den Schacht 42 einsetzbar ist, wobei der auf der Oberseite des Tragkörpers 25 ausgebildete, fingerartige Höcker 26 sich längs der abgerundeten Schwertschneide 121 des Druckstücks 12 erstreckt und in den Einlegekanal 11 hineinragt. Über die Rastmulde 27 im Tragkörper 25 (Fig. 5) wird das Gegenstück 13 in seiner eingesetzten Position im Schacht 42 verrastet. Mittels eines am Tragkörper 25 ausgebildeten, hier nicht dargestellten, Griffteils kann das Gegenstück 13 in Fig. 3 nach links manuell aus dem Schacht 42 herausgezogen werden, um bedarfsweise einen im Einlegekanal 11 einliegenden Leitungsabschnitt mühelos entfernen oder wechseln zu können.

Bei der beschriebenen Vorrichtung zum Klemmen der elastischen Leitung umfasst die elektromotorische Antriebseinheit 14 einen an eine Versorgungsspannung anschließbaren Elektromotor 43 , z. B. einen an 12 V oder 24 V Gleichspannung anschließbaren Gleichstrommotor, und ein die Abtriebswelle 15 aufweisendes Getriebe 44, z. B. Untersetzungsgetriebe, von denen in Fig. 1 bis 3 nur Motorgehäuse 45 und Getriebegehäuse 46 zu sehen sind. Der Anschluss der Versorgungsspannung erfolgt über ein Steuergerät 47, das hierzu Anschlussklemmen 48 (+) und 49 (-) aufweist. Das Steuergerät 47 ist auf einer am Basisteil 28, genauer gesagt am Flanschkörper 33, befestigten Platine 50 angeordnet, die sich längs der elektromotorischen Antriebseinheit 14 erstreckt und sich am Motorgehäuse 45 abstützt.

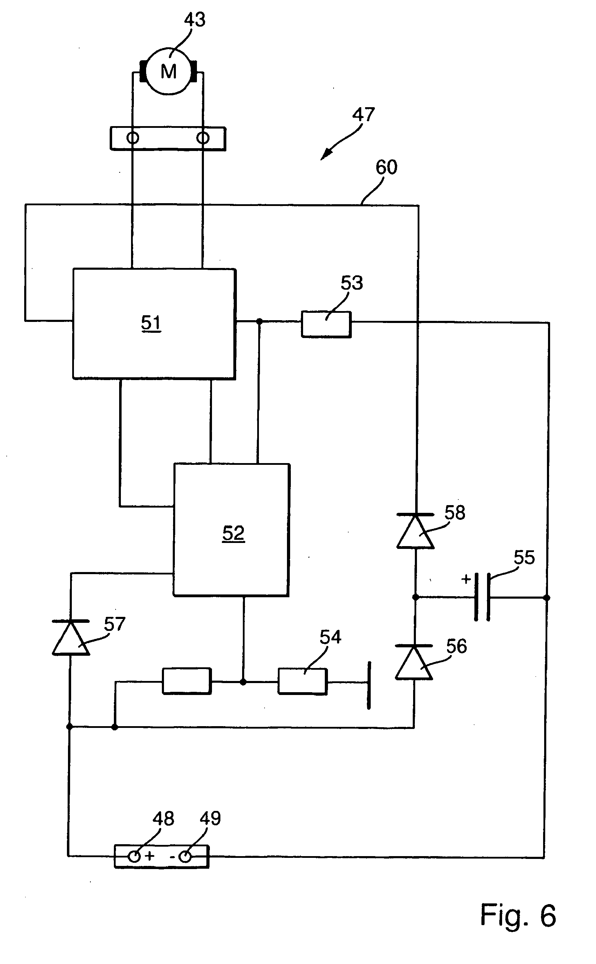

Das Steuergerät 47, dessen Schaltplan in Fig. 6 dargestellt ist, weist einen an die Anschlussklemmen 48, 49 angeschlossenen Stromkreis 60, in den der Elektromotor 43 über eine Brückenendstufe 51 eingebunden ist, sowie eine Steuereinheit 52, z. B. Steuerelektronik, zur Steuerung des Elektromotors 43 in inversen Drehrichtungen auf. Im Stromkreis 60 ist ferner ein Messwiderstand 53 zur Strommessung angeordnet, dessen Messgröße der Steuereinheit 52 zugeführt ist. An dem Stromkreis 60 ist ein Spannungsteiler 54 zum Abtasten der Versorgungsspannung angeschlossen, wobei der Spannungsabgriff des Spannungsteilers 54 der Steuereinheit 52 zugeführt ist. Ein Energiespeicher 55 ist einerseits unmittelbar an die Minus-Anschlussklemme 49 und andererseits über eine Verpolschutzdiode 56 an die Plus-Anschlussklemme 48 gelegt, an der auch der Spannungsteiler 54 angeschlossen ist. Die Steuereinheit 52 ist über eine weitere Verpolschutzdiode 57 an die Plus-Anschlussklemme 48 gelegt und ist über Steuerleitungen mit der Brückenendstufe 51 verbunden. In dem Stromkreiszweig zwischen der Brückenschaltung 51 und dem Anschlusspunkt von Energiespeicher 55 und Verpolschutzdiode 56 ist noch eine Entkopplungsdiode 58 angeordnet.

Die Steuereinheit 52 weist mehrere Steuermodule auf, die in einem Mikroprozessor zusammengefasst sind. Mit einem ersten Steuermodul wird die Druckkraft des Druckstücks 12 abhängig von der vom Messwiderstand 53 gelieferten Messgröße eingestellt. Ein zweites Steuermodul erkennt, abhängig von der Messgröße des Messwiderstands 53, das Ende des Verstellwegs des Druckstücks 12 und löst eine Abschaltung des Elektromotors 43 oder zumindest eine Reduzierung der Stromaufnahme auf. Ein drittes Steuermodul löst abhängig von der vom Spannungsteilerabgriff der Steuereinheit 52 zugeführten Spannung bei Spannungsabfall der Versorgungsspannung ein Überführen des Druckstücks 12 in eine vorgegebene Verschiebeendlage aus. Der am Stromkreis 60 des Elektromotors 43 angeschlossene Energiespeicher 55, der als Kondensator oder als Akku ausgeführt sein kann, übernimmt bei Ausfall der Versorgungsspannung die kurzzeitige Stromversorgung des Elektromotors 43, so dass dieser in eine Endlage überführt werden kann. Schließlich steuert ein vierter Steuermodul die Brückenendschaltung 51 zwecks Drehrichtungsumkehr des Elektromotors 43.

## Patentansprüche

1. Vorrichtung zum radialen Zusammendrücken einer elastischen Leitung für ein strömendes Medium an einer Leitungsstelle, mit einem Einlegekanal (11) zum Einlegen eines Leitungsabschnitts der Leitung, mit einem quer zum Einlegekanal (11) verschieblichen Druckstück (12) und einem am Einlegekanal (11) dem Druckstück (12) gegenüberliegenden Gegenstück (13), die beide in den Einlegekanal (11) hineinragen, und mit einem auf das Druckstück (12) zu dessen Verschiebung wirkenden Aktor, wobei der Aktor eine elektromotorische Antriebseinheit (14) mit einer Abtriebswelle (15) und ein eine Drehbewegung der Abtriebswelle (15) in eine Linearbewegung des Druckstücks (12) umsetzendes Translationsmodul (16) aufweist, der Einlegekanal (11) in einem die elektromotorische Antriebseinheit (14) tragenden Basisteil (28), dieses quer durchlaufend, enthalten ist und das Translationsmodul (16) im Basisteil (28) aufgenommen ist und das mit dem Translationsmodul (16) verbundene Druckstück (12) durch eine den Einlegekanal (11) querende Ausnehmung (29) in der Kanalwand des Einlegekanals (11) hindurchtaucht, und das Gegenstück (13) in einen im Basisteil (28) der Ausnehmung (29) gegenüberliegend ausgebildeten, den Einlegekanal (11) querenden Schacht (42) herausnehmbar eingesetzt ist, **dadurch gekennzeichnet, dass** das Translationsmodul (16) selbsthemmend ist und ein mit der Abtriebswelle (15) fest verbundenes Eingangsglied (17) und ein mit dem Druckstück (12) fest verbundenes Ausgangsglied (18) aufweist, und wobei Ein- und Ausgangsglied (17, 18) koaxial angeordnet sind und jeweils eine von zwei aufeinander gleitenden, in Achsrichtung ansteigenden Steuerkonturen (19, 20) aufweisen.

2. Vorrichtung nach Anspruch 1, **dadurch gekennzeichnet, dass** das Ausgangsglied (18) mit dem Druckstück (12) einstückig ausgebildet ist.

3. Vorrichtung nach Anspruch 1 oder 2, **dadurch gekennzeichnet, dass** das Ausgangsglied (18) des Translationsmoduls (16) einen ersten und zweiten Axialanschlag aufweist, die zusammen mit einem am Basisteil (28) ausgebildeten ersten Gegenanschlag und einem am Eingangsglied (17) des Translationsmoduls (16) ausgebildeten zweiten Gegenanschlag den Verschiebeweg des Druckstücks (12) begrenzen.

4. Vorrichtung nach einem der Ansprüche 1 bis 3, **dadurch gekennzeichnet, dass** das Druckstück (12) schwertartig mit gerundeter Schwertschneide (121) ausgebildet ist und das Gegenstück (13) einen der Schwertschneide (121) zugekehrten, sich in Richtung der Schwertschneide (121) erstreckenden, fingerartigen, konvexen Höcker (26) aufweist.

5. Vorrichtung nach Anspruch 4, **dadurch gekennzeichnet, dass** der Höcker (26) auf der Oberfläche eines etwa quaderförmigen Tragkörpers (25), vorzugsweise einstückig mit diesem, angeordnet ist, und der Tragkörper (25) in dem Schacht (42) geführt ist.

6. Vorrichtung nach einem der Ansprüche 1 bis 5, **dadurch gekennzeichnet, dass** die elektromotorische Antriebseinheit (14) einen Elektromotor (43), z. B. Gleichstrommotor, der in einem an eine Versorgungsspannung anschließbaren Stromkreis (60) angeordnet ist, und ein die Abtriebswelle (15) aufweisendes Getriebe (44), z. B. Untersetzungsgetriebe, umfasst.

7. Vorrichtung nach Anspruch 6, **dadurch gekennzeichnet, dass** im Stromkreis (60) des Elektromotors (43) ein Messwiderstand (53) zur Strommessung angeordnet ist und die am Messwiderstand (53) abgegriffene Messgröße einer den Elektromotor (43) steuernden Steuereinheit (52), z. B. Steuerelektronik, zugeführt wird.

8. Vorrichtung nach Anspruch 7, **dadurch gekennzeichnet, dass** die Steuereinheit (52) ein erstes Steuermodul aufweist, das die Druckkraft des Druckstücks (12) abhängig von der Messgröße einstellt.

9. Vorrichtung nach Anspruch 7 oder 8, **dadurch gekennzeichnet, dass** die Steuereinheit (52) ein zweites Steuermodul aufweist, das abhängig von der Messgröße das Ende des Verstellwegs des Druckstücks (12) erkennt und eine Abschaltung des Elektromotors (53) oder eine Reduzierung dessen Stromaufnahme auslöst.

10. Vorrichtung nach einem der Ansprüche 7 bis 9, **dadurch gekennzeichnet, dass** an dem Stromkreis (60) des Elektromotors (53) ein Spannungsteiler (54) zum Abtasten der Versorgungsspannung angeschlossen ist und die Steuereinheit (52) ein drittes Steuermodul aufweist, dem die am Spannungsteiler (54) abgetastete Spannung zugeführt ist und das abhängig von einem Spannungsabfall der abgetasteten Spannung die Überführung des Druckstücks (12) in eine Verschiebeendlage auslöst.

11. Vorrichtung nach Anspruch 10, **dadurch gekennzeichnet, dass** an dem Stromkreis (60) des Elektromotors (43) ein Energiespeicher (55) angeschlossen ist, der bei Ausfall der Versorgungsspannung kurzzeitig die Stromversorgung des Elektromotors (43) übernimmt.

12. Vorrichtung nach einem der Ansprüche 7 bis 11, **dadurch gekennzeichnet, dass** im Stromkreis (60) des Elektromotors (43) eine Brückenendstufe (51) angeordnet ist und die Steuereinheit (52) ein die Brückenendstufe (51) ansteuerndes viertes Steuermodul zum Umkehren der Drehrichtung des Elektromotors (43) aufweist.

13. Vorrichtung nach einem der Ansprüche 7 bis 12, **dadurch gekennzeichnet, dass** die Steuereinheit (52) als ein die Steuermodule zusammenfassender Mikroprozessor ausgebildet ist.

## Claims

1. A device for radially compressing an elastic line for a flowing medium at a line point, with an insertion channel (11) for insertion of a line section of the line, with a pressure element (12) displaceable transversely to the insertion channel (11) and a counterpart (13) located opposite the pressure element (12) on the insertion channel (11) and which both extend into the insertion channel (11), and with an actuator adapted to act upon the pressure element (12) for the displacement thereof, wherein the actuator comprises an electric-motor drive unit (14) having an output shaft (15) and a translation module (16) for converting rotational motion of the output shaft (15) into linear motion of the pressure element (12), wherein the insertion channel (11) is contained in a base part (28) carrying the electric-motor drive unit (14) and passes transversely there through, and wherein the translation module (16) is housed in the base part (28), and wherein the pressure element (12) connected to the translation module (16) extends through a recess (29) in the channel wall of the insertion channel (11), which crosses the insertion channel (11), and wherein the counterpart (13) is removably inserted in a chute (42) crossing the insertion channel (11) and is formed in the base part (28) opposite the recess (29), **characterized in that** the translation module (16) is self-inhibiting and comprises an input element (17) which is fixedly connected to the output shaft (15), and an output element (18), which is fixedly connected to the pressure element (12), and wherein the input element and the output element (17, 18) are coaxially disposed and each comprise one of two control contours (19, 20), which glide on top of one another and rise in the axial direction.

2. The device according to claim 1, **characterized in that** the output element (18) is formed as one piece with the pressure element (12).

3. The device according to claim 1 or 2, **characterized in that** the output element (18) of the translation module (16) comprises a first axial stop and a second axial stop, which, together with a first counterstop formed on the base part (28) and a second counterstop formed on the input element (17) of the translation module (16), limit the displacement travel of the pressure element (12).

4. The device according to anyone of claims 1 to 3, **characterized in that** the pressure element (12) is shaped as a blade having a rounded blade edge (121), and that the counterpart (13) comprises a finger-shaped, convex hump (26), which faces the blade edge (121) and extends in the direction of the blade edge (121).

5. The device according to claim 4, **characterized in that** the hump (26) is disposed on the surface of an approximately cuboid carrier element (25), and is formed as one piece therewith, and that the carrier element (25) is guided in the chute (42).

6. The device according to anyone of claims 1 to 5, **characterized in that** the electric-motor drive unit (14) comprises an electric motor (43), e.g. a DC motor, disposed in an electric circuit (60) that is connected to a supply voltage, and comprises a gearbox (44), e.g. in the form of a reduction gear, which gearbox comprises the output shaft (15).

7. The device according to claim 6, **characterized in that** a shunt (53) for measuring current is disposed in the electric circuit (60) of the electric motor (43), and the measured quantity tapped at the shunt (53) is fed to a control unit (52), e.g. a control electronic, that controls the electric motor (43).

8. The device according to claim 7, **characterized in that** the control unit (52) comprises a first control module that adjusts the compressive force of the pressure element (12) depending on the measured quantity.

9. The device according to claim 7 or 8, **characterized in that** the control unit (52) comprises a second control module, which, depending on the measured quantity, detects the end of the displacement travel of the pressure element (12) and triggers a shut-off of the electric motor (53) or a reduction in the current consumption thereof.

10. The device according to anyone of claims 7 to 9, **characterized in that** a voltage divider (54) for tapping the supply voltage is connected to the electric circuit (60) of the electric motor (53), and the control unit (52) comprises a third control module, to which the voltage tapped at the voltage divider (54) is fed and which, depending on a voltage drop of the tapped voltage, triggers the displacement of the pressure element (12) into a displacement end position.

11. The device according to claim 10, **characterized in that** an energy storage mechanism (55) is connected to the electric circuit (60) of the electric motor (43), which supplies power to the electric motor (43) temporarily if the supply voltage fails.

12. The device according to anyone of claim 7 to 11, **characterized in that** a bridge output stage (51) is disposed in the electric circuit (60) of the electric motor (43), and the control unit (52) comprises a fourth control module, which controls the bridge output stage (51), for reversing the rotational direction of the electric motor (43).

13. The device according to anyone of claims 7 to 12, **characterized in that** the control unit (52) is in the form of a microprocessor that comprises the control modules.

## Revendications

1. Dispositif servant à presser radialement un conduit élastique destiné à un milieu en écoulement au niveau d'un emplacement de conduit, comprenant un canal d'insertion (11) servant à insérer un tronçon de conduit du conduit, comprenant une pièce de pression (12) pouvant être déplacée par coulissement de manière transversale par rapport au canal d'insertion (11) et une pièce antagoniste (13) faisant face à la pièce de pression (12) au niveau du canal d'insertion (11), lesdites deux pièces faisant saillie à l'intérieur du canal d'insertion (11), et comprenant un actionneur agissant sur la pièce de pression (12) aux fins du déplacement par coulissement de cette dernière, sachant que l'actionneur présente une unité d'entraînement (14) à moteur électrique pourvue d'un arbre de sortie (15) ainsi qu'un module de translation (16) transformant un déplacement rotatif de l'arbre de sortie (15) en un déplacement linéaire de la pièce de pression (12), que le canal d'insertion (11) est compris dans une pièce de base (28) qu'il traverse de manière transversale et qui supporte l'unité d'entraînement (14) à moteur électrique et sachant que le module de translation (16) est logé dans la partie de base (28) et que la pièce de pression (12) reliée au module de translation (16) s'enfonce à travers un évidement (29) traversant le canal d'insertion (11), dans la paroi de canal du canal d'insertion (11), et sachant que la pièce antagoniste (13) est introduite de manière amovible dans une gaine (42) réalisée dans la pièce de base (28) de manière à faire face à l'évidement (29), traversant le canal d'insertion (11), **caractérisé en ce que** le module de translation (16) est à blocage automatique, et présente un organe d'entrée (17) relié de manière solidaire à l'arbre de sortie (15) et un organe de sortie (18) relié de manière solidaire à la pièce de pression (12), et **en ce que** l'organe d'entrée et l'organe de sortie (17, 18) sont disposés de manière coaxiale et présentent respectivement un des deux contours de commande (19, 20) glissant l'un sur l'autre effectuant un mouvement ascendant dans le sens axial.

2. Dispositif selon la revendication 1, **caractérisé en ce que** l'organe de sortie (18) est réalisé d'un seul tenant avec la pièce de pression (12).

3. Dispositif selon la revendication 1 ou 2, **caractérisé en ce que** l'organe de sortie (18) du module de translation (16) présente une première butée axiale et une deuxième butée axiale, lesquelles délimitent la course de déplacement par coulissement de la pièce de pression (12) à l'aide d'une première contrebutée réalisée au niveau de la partie de base (28) et d'une deuxième contrebutée réalisée au niveau de l'organe d'entrée (17) du module de translation (16).

4. Dispositif selon l'une quelconque des revendications 1 à 3, **caractérisé en ce que** la pièce de pression (12) est réalisée à la manière d'une lame avec un tranchant de lame (121) arrondi, et **en ce que** la pièce antagoniste (13) présente une bosse (26) convexe tournée vers le tranchant de lame (121), s'étendant dans le sens de la lame de tranchant (121), réalisée à la manière d'un doigt.

5. Dispositif selon la revendication 4, **caractérisé en ce que** la bosse (26) est disposée sur la surface d'un corps porteur (25) approximativement de forme carrée, de préférence réalisée d'un seul tenant avec ce dernier, et **en ce que** le corps porteur (25) est guidé dans la gaine (42).

6. Dispositif selon l'une quelconque des revendications 1 à 5, **caractérisé en ce que** l'unité d'entraînement (14) à moteur électrique comprend un moteur électrique (43), par exemple un moteur à courant continu, qui est disposé dans un circuit électrique (60) pouvant être raccordé à une tension d'alimentation, et un engrenage (44) présentant l'arbre de sortie (15), par exemple un engrenage réducteur.

7. Dispositif selon la revendication 6, **caractérisé en ce qu'**une résistance de mesure (53) servant à mesurer le courant est disposée dans le circuit électrique (60) du moteur électrique (43), et **en ce que** la grandeur de mesure obtenue au niveau de la résistance de mesure (53) est amenée à une unité de commande (52) commandant le moteur électrique (43), par exemple à un système électronique de commande.

8. Dispositif selon la revendication 7, **caractérisé en ce que** l'unité de commande (52) présente un premier module de commande, qui règle la force de pression de la pièce de pression (12) en fonction de la grandeur de mesure.

9. Dispositif selon la revendication 7 ou 8, **caractérisé en ce que** l'unité de commande (52) présente un deuxième module de commande, qui identifie, en fonction de la grandeur de mesure, la fin de la course de déplacement de la pièce de pression (12) et qui déclenche une mise à l'arrêt du moteur électrique (53) ou une réduction de la consommation de courant de ce dernier.

10. Dispositif selon l'une quelconque des revendications 7 à 9, **caractérisé en ce qu'**un diviseur de tension (54) servant à détecter la tension d'alimentation est raccordé au circuit électrique (60) du moteur électrique (53), et **en ce que** l'unité de commande (52) présente un troisième module, auquel est amenée la tension détectée au niveau du diviseur de tension (54) et qui déclenche, selon une baisse de tension de la tension détectée, le transfert de la pièce de pression (12) dans une position de fin de course de déplacement par coulissement.

11. Dispositif selon la revendication 10, **caractérisé en ce qu'**est raccordé au circuit électrique (60) du moteur électrique (43) un accumulateur d'énergie (55), qui récupère, en cas de coupure de la tension d'alimentation, sur un bref laps de temps, l'alimentation en courant du moteur électrique (43).

12. Dispositif selon l'une quelconque des revendications 7 à 11, **caractérisé en ce qu'**un étage terminal en pont (51) est disposé dans le circuit électrique (60) du moteur électrique (43), et **en ce que** l'unité de commande (52) présente un quatrième module de commande commandant l'étage terminal en pont (51), servant à inverser le sens de rotation du moteur électrique (43).

13. Dispositif selon l'une quelconque des revendications 7 à 12, **caractérisé en ce que** l'unité de commande (52) est réalisée sous la forme d'un microprocesseur regroupant les modules de commande.
